# EUROPÄISCHE PATENTSCHRIFT

(11) **EP 2 957 414 B1**
(45) Veröffentlichungstag und Bekanntmachung des Hinweises auf die Patenterteilung: **20.02.2019**
(21) Anmeldenummer: 15000522.1
(22) Anmeldetag: 23.12.2011
(51) Int. Cl.: B29C 49/12, B29C 49/46, B29C 49/06

(54) **Verfahren und Vorrichtung zur Blasformung von sterilen Behältern**
Method and device for blow-moulding sterilized containers
Procédé et dispositif destinés au formage par soufflage de récipients stériles

(30) Priorität: 04.01.2011 DE 102011008132
(43) Veröffentlichungstag der Anmeldung: 23.12.2015
(62) Teilanmeldung aus: 11822820.4
(73) Patentinhaber: KHS Corpoplast GmbH, 22145 Hamburg (DE)
(72) Erfinder: Herold, Thomas, 22941 Bargteheide (DE); Rieger, Harald, 22303 Hamburg (DE); Klatt, Dieter, 22147 Hamburg (DE); Gerhards, Martin, 22089 Hamburg (DE)
(74) Vertreter: Hausfeld, Norbert

(56) Entgegenhaltungen:
- EP-A2- 2 388 127
- WO-A1-2010/020530
- DE-A1-102008 030 156
- DE-A1-102008 038 141

## Beschreibung

Die Erfindung betrifft ein Verfahren zur Herstellung von blasgeformten mindestens bereichsweise sterilen Behältern, bei dem ein Vorformling aus einem thermoplastischen Material zunächst erwärmt und dann von einer Reckstange gereckt und mit einem unter Druck stehenden Fluid beaufschlagt wird sowie bei dem ein Sterilisationsmittel in den Bereich des Vorformlings zugeführt wird.

Darüber hinaus betrifft die Erfindung eine Vorrichtung zur Herstellung von mindestens bereichsweise sterilen blasgeformten Behältern, die eine Zuführeinrichtung zur Beaufschlagung mindestens eines Teiles eines Vorformlings mit einem Sterilisationsmittel aufweist, sowie die mit einer Heizstrecke zur Temperierung der Vorformlinge und einer Blaseinrichtung zur Blasverformung der vorformlinge in die Behälter versehen ist, wobei die Blaseinrichtung eine Reckstange aufweist.

Eine Herstellung von sterilen blasgeformten Behältern erfolgt typischerweise derart, daß diese Behälter nach ihrer Blasformung und vor einer Befüllung unter Verwendung von Wasserstoffperoxid oder anderen Chemikalien sterilisiert werden. Ebenfalls ist es bereits bekannt, die bei der Blasformung der Behälter als Ausgangsprodukt verwendeten Vorformlinge zu sterilisieren, insbesondere den Bereich der inneren Oberfläche dieser Vorformlinge.

Bei einer Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE -OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. zum anderen erfolgt eine Anwendung bei den sogenannten Einstufenverfahren, bei denen die vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Hinsichtlich der Sterilisierung von Vorformlingen sind aus dem Stand der Technik bereits unterschiedliche Verfahren und Vorrichtungen bekannt, die jedoch alle verfahrensspezifische Nachteile aufweisen, die einer zuverlässigen Sterilisierung der Vorformlinge bei gleichzeitig hohen Durchsatzraten entgegenstehen.

In der EP-A 1 086 019 wird beispielsweise die Sterilisierung von heißen Vorformlingen mit einem heißen gasförmigen Sterilisationsmittel beschrieben. Es werden hintereinander angeordnete separate Behandlungsstationen verwendet, nämlich ein erstes Heizmodul, ein Sterilisiermodul sowie ein zweites Heizmodul. Nachteilig ist hierbei das Temperaturverhalten des Vorformlings während des Sterilisiervorganges sowie das unkontrollierte Austreten des Sterilisationsmittels aus dem Vorformling innerhalb der Heizung.

In der EP-A 1 896 245 wird ein Verfahren beschrieben, bei dem vor der Heizung ein gasförmiges Sterilisationsmittel in einen kalten Vorformling eingeleitet wird und hier kondensiert. Problematisch ist hier die Sicherstellung einer vollständigen Kondensatbildung auf der gesamten Innenfläche des Vorformlings, da das einströmende heiße Sterilisationsmittel die Innenwandtemperatur des Vorformlings erhöht. Darüber hinaus tritt auch hier das Sterilisationsmittel nach seiner Verdampfung im Bereich der Heizung unkontrolliert innerhalb der Heizung aus dem Vorformling aus.

In der EP-A 2 138 298 und der DE 10 2008 030 156 A1 wird eine Vorrichtung beschrieben, bei der vorsorglich sowohl vor dem verwendeten Blasmodul als auch hinter dem verwendeten Blasmodul Sterilisiereinrichtungen angeordnet sind. Hieraus resultiert ein sehr großer maschinenbaulicher Aufwand.

In der WO 2010/020530 A1 wird die Anordnung einer Sterilisiereinrichtung zwischen einer Heizung und dem Blasmodul beschrieben. Bei diesem Verfahren ist die Eintragsmenge von Sterilisationsmittel in den Bereich des Blasmoduls nur schwer vorhersehbar. Darüber hinaus ist die Austrittsmenge an Sterilisationsmittel in die Umgebung nicht kontrollierbar und eine entsprechende Kontamination nicht ausgeschlossen.

Aus DE 10 2008 038 141 A1 ist eine Vorrichtung zum Umformen von Kunststoffvorformlingen zu Kunststoffbehältnissen bekannt, die eine Sterilisationseinrichtung aufweist, welche wenigstens einen Bereich der Kunststoffvorformlinge vor Erreichen der Vorrichtung sterilisiert.

Einen gattungsgemäßen Stand der Technik zeigt die WO 2010/020530 A1. In einem ersten Ausführungsbeispiel erfolgt die Sterilisierung der Vorformlinge außerhalb der Blasstation z.B. mittels der Zuführung von Wasserstoffperoxid. In einer alternativen Ausführungsform soll ein unsteriler Vorformling im laufenden Blasformungsbetrieb innerhalb der Blasstation expandiert werden durch Zuführen eines Sterilisationsmediums wie beispielsweise Wasserstoffperoxid durch eine hohle Reckstange hindurch.

Nach einer erfolgten Sterilisierung und Beheizung der Vorformlinge werden diese einer Blaseinrichtung zugeführt und dort unter Verwendung von steriler Blasluft in die Behälter umgeformt. Bei der Blasformung der Behälter strömt die verwendete Blasluft aus der Reckstange heraus oder an der Reckstange vorbei. Darüber hinaus kommt die Reckstange im Bereich der Reckstangenkuppe sowohl mit dem Vorformling als auch mit dem geblasenen Behälter in Kontakt. Zur Gewährleistung einer ausreichenden Sterilität der geblasenen Behälter ist es somit erforderlich, auch für eine ausreichende Sterilität der Reckstange zu sorgen. Ein zuverläs siges und zugleich technisch einfach durchführbares Verfahren hierfür ist bislang nicht bekannt geworden.

Aufgabe der vorliegenden Erfindung ist es, ein Verfahren der einleitend genannten Art derart zu verbessern, daß in einfacher Weise eine ausreichende Sterilität gewährleistet werden kann.

Diese Aufgabe wird erfindungsgemäß durch ein Verfahren mit den Merkmalen des Anspruchs 1 gelöst.

Weitere Aufgabe der vorliegenden Erfindung ist es, eine Vorrichtung der einleitend genannten Art derart zu konstruieren, daß eine effektive Sterilität mit geringem Aufwand gewährleistet ist.

Diese Aufgabe wird erfindungsgemäß durch eine Vorrichtung mit den Merkmalen des Anspruch 7 gelöst.

Durch die Sterilisierung der Reckstange im Bereich der Blaseinrichtung ist es möglich, arbeitsintensive Ein- und Ausbauvorgänge zu vermeiden, die für eine externe Sterilisierung der Reckstange erforderlich wären. Durch die Verwendung einer Zuführeinrichtung für das Sterilisationsmittel ist es darüber hinaus möglich, den Sterilisierungsvorgang vollautomatisch durchzuführen. Insbesondere ist es möglich, einen üblichen Produktionsablauf bedarfsabhängig oder in vorgegebenen Zeiträumen zu unterbrechen und in diesen Unterbrechungsphasen die Sterilisierung der Reckstange vorzunehmen.

Eine vollautomatische Sterilisierung ohne zusätzliche Handhabungen kann dadurch erreicht werden, daß die Reckstange mindestens bereichsweise durch eine Reinigungskammer hindurchgeführt wird.

Zur Sicherstellung einer gezielten Handhabung des Sterilisationsmittels wird vorgeschlagen, daß ein Blasformungsbetrieb der Blaseinrichtung für die Durchführung der Reckstangensterilisierung unterbrochen wird.

Ungewollte Kontaminationen können insbesondere dadurch vermieden werden, daß für die Durchführung der Sterilisierung der Reckstange ein gesonderter Aufnahmebehälter in eine Blasstation der Blaseinrichtung eingesetzt wird.

Ein besonders einfacher Verfahrensablauf läßt sich dadurch erreichen, daß ein Vorformling in die Blasstation eingesetzt wird.

Ein großer Sterilisierungsbereich entlang einer Längsausdehnung der Reckstange wird dadurch bereitgestellt, daß der vorformling gereckt und teilweise expandiert wird.

Eine Strömung des Sterilisationsmittels entlang der Reckstange wird dadurch unterstützt, daß mindestens ein Teil des Sterilisationsmittels durch die Reckstange hindurch zugeführt wird.

Gemäß einer anderen Ausführungsform ist auch daran gedacht, daß mindestens ein Teil des Sterilisationsmittels an der Reckstange vorbei zugeführt wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine schematische Darstellung eines Heizmoduls einer Blasmaschine, bei der im Bereich des Heizmoduls eine Sterilisiereinrichtung angeordnet ist,
- Fig. 6: einen Vertikalschnitt durch eine Kammer zur abschnittsweisen Sterilisierung der Reckstange,
- Fig. 7: einen Längsschnitt durch eine Blasstation mit einem während des Sterilisiervorganges eingesetzten Behälter bei einer Zuführung des Sterilisationsmittels durch die Reckstange hindurch,
- Fig. 8: eine gegenüber Fig. 7 abgewandelte Ausführungsform bei einer Zuführung des Sterilisationsmittels an der Reckstange vorbei und
- Fig. 9: eine weitere Darstellung zur Veranschaulichung einer Zufuhr des Sterilisationsmittels.

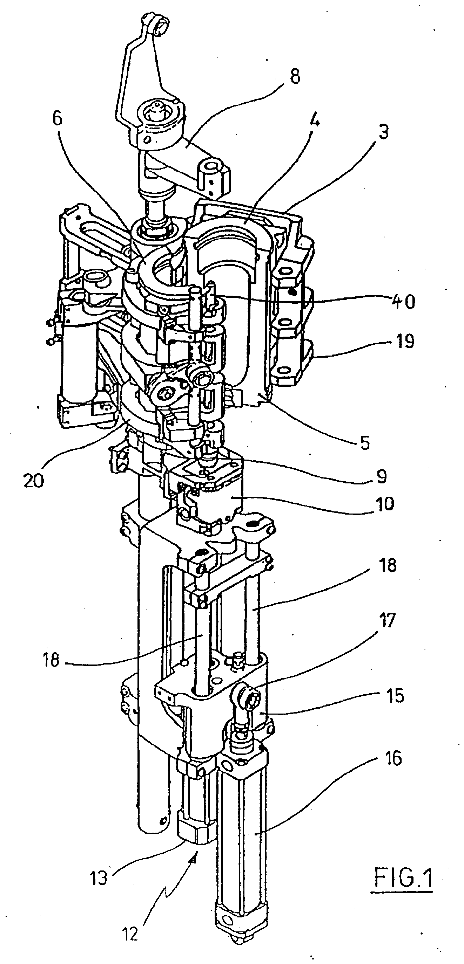

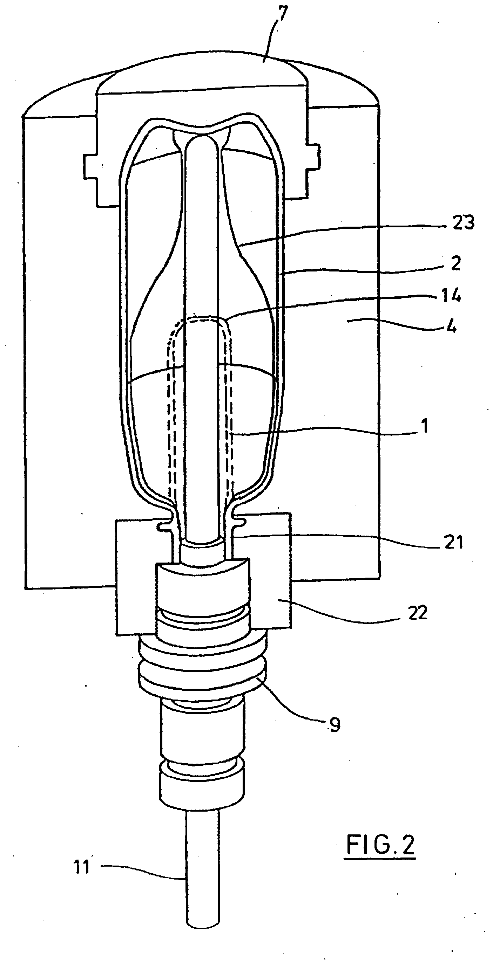

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn, des eigentlichen Reckvorganges bis in den Bereich eines Bodens (14) des vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18) .

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

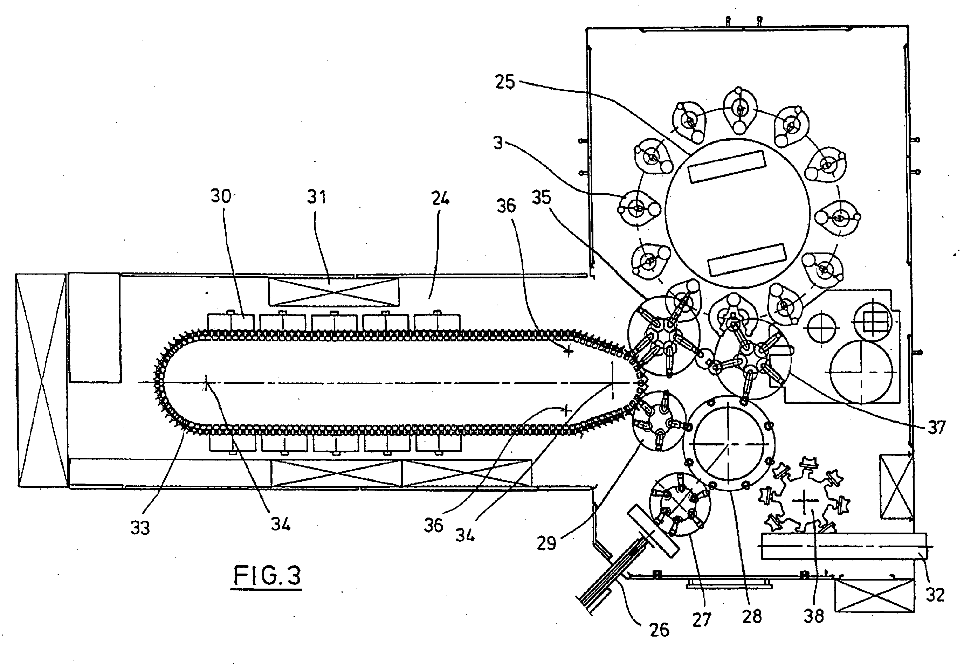

Fig. 3 zeigt den grundsätzlichen Aufbau einer Blasmaschine, die mit einer Heizstrecke (24) sowie einem rotierenden Blasrad (25) versehen ist. Ausgehend von einer vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

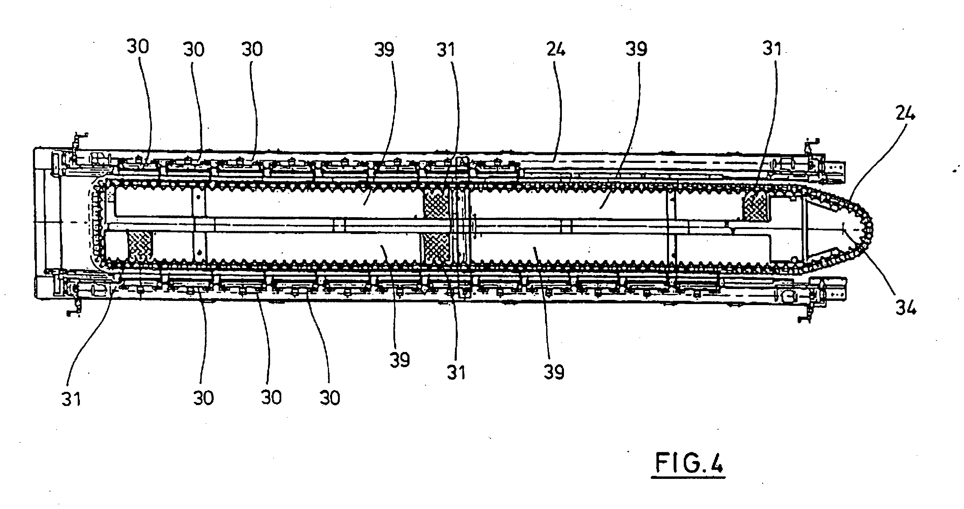

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

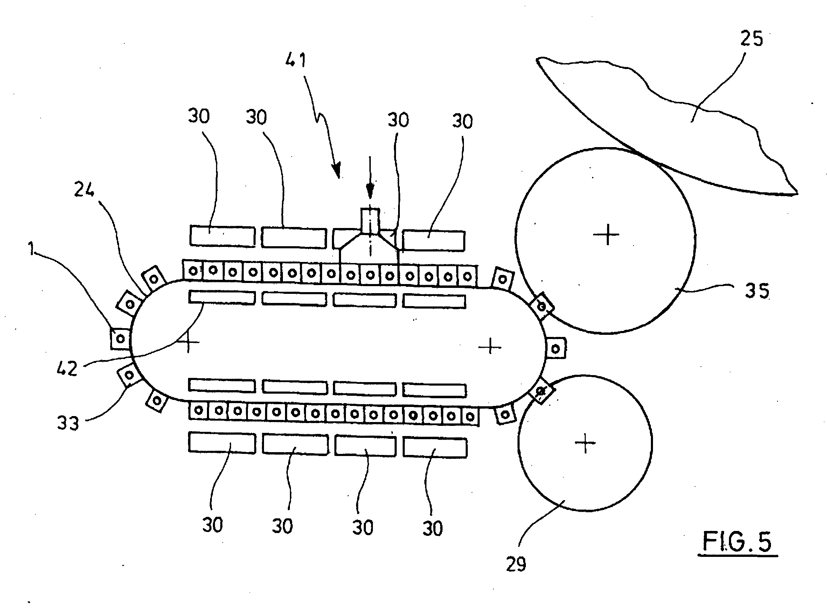

Fig. 5 zeigt schematisch und stark vereinfacht eine Anordnung ähnlich zur Darstellung in Fig. 3 mit zusätzlicher Anordnung einer Sterilisiereinrichtung (41) im Bereich der Heizstrecke (24). Zusätzlich eingezeichnet sind die Transportelemente (33) der Heizstrecke (24).

Das Sterilisationsmittel wird vorzugsweise in einem gasförmigen Zustand in den Vorformling (1) eingeleitet. Insbesondere ist an eine Temperatur des Sterilisationsmittels von oberhalb 100°C gedacht. Vorzugsweise weist der Vorformling (1) bei der Durchführung des Sterilisationsvorganges im Bereich seiner zu sterilisierenden inneren Oberfläche eine Temperatur von oberhalb 80°C auf. Hinsichtlich des Sterilisationsmittels ist insbesondere an die Verwendung von Wasserstoffperoxid gedacht. Fig. 5 veranschaulicht die Anordnung des Vorformlings (1) während der Durchführung des Sterilisationsvorganges im Bereich der Heizstrecke (24). Der Vorformling (1) wird hierbei sowohl vom Sterilisationsmittel als auch von Heizstrahlern (30) beaufschlagt. Vorzugsweise erfolgt die Beaufschlagung des Vorformlings (1) mit dem Sterilisationsmittel im Bereich der inneren Oberfläche des Vorformlings (1) und eine Beaufschlagung mit der Heizstrahlung im Bereich einer äußeren Oberfläche. Beim dargestellten Ausführungsbeispiel sind die Heizstrahler (30) entlang einer Transportrichtung der Vorformlinge (1) durch die Heizstrecke (24) einseitig angeordnet. Den Heizstrahlern (30) gegenüberliegend sind Reflektoren (42) positioniert. Typischerweise werden die Heizstrahler (30) im Bereich von Heizkästen angeordnet, wobei auf einer den Vorformlingen (1) abgewandten Seite der Heizstrahler (30) vom Heizkasten gehalterte Reflektoren angeordnet sind. Vorzugsweise weisen die Reflektoren ein Reflektionsprofil auf. Zwischen den Heizstrahlern (30) und den Vorformlingen (1) kann eine Filterscheibe positioniert werden, die frequenzselektive Eigenschaften aufweist. Die Filterscheibe kann beispielsweise aus Quarzglas bestehen.

vorzugsweise generieren die Heizstrahler (30) eine Heizstrahlung im NIR-Bereich. Verwendbar sind aber auch Infrarot-Strahler, lichtemittierende Dioden oder Strahleinrichtungen für Mikrowellenenergie oder Hochfrequenz-Energie.

Gegebenenfalls ist auch eine Kombination von zwei oder mehr der vorstehend aufgeführten Wärmequellen möglich.

Gemäß typischen Prozeßbedingungen weist das Sterilisationsmittel während der Durchführung der Sterilisierung eine Temperatur im Bereich von 100°C bis 130°C auf. Der Vorformling (1) weist während der Durchführung der Sterilisierung mindestens im Bereich seiner inneren Oberfläche eine Temperatur von 100°C bis 130°C auf. Eine typische Sterilisationsdauer beträgt etwa 0,1 bis 0,5 sec. Als Sterilisationsmittel wird bevorzugt verdampftes Wasserstoffperoxid verwendet, das mit Heißluft gemischt wird. Die Wasserstoffperoxidkonzentration beträgt dabei etwa 15 bis 35 Gewichtsprozent.

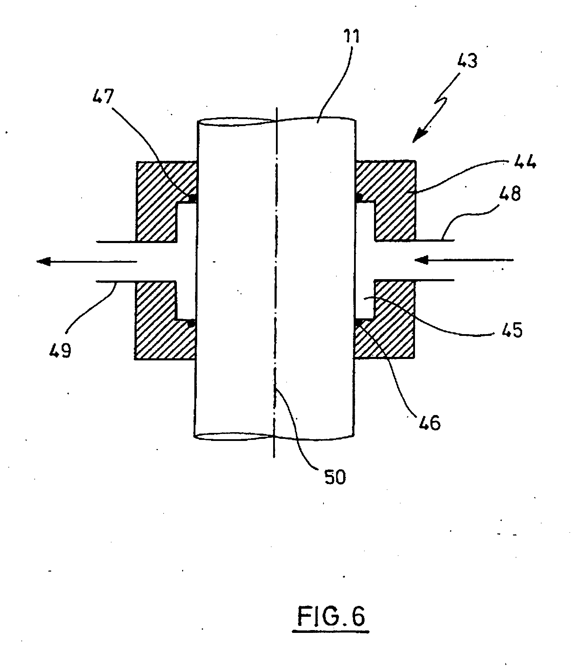

Fig. 6 zeigt eine teilweise Darstellung eines Querschnittes einer Reinigungskammer (43), die im Bereich der Blasstation (3) angeordnet ist. Die Reinigungskammer (43) weist eine Kammerwandung (44) und einen Innenraum (45) auf. Durch den Innenraum (45) hindurch ist abgedichtet die Reckstange (11) geführt. Die Abdichtung kann beispielsweise unter Verwendung von O-Ringen (46, 47) erfolgen.

Der Innenraum (45) weist einen Einlaß (48) und einen Auslaß (49) für ein Sterilisiermittel auf. Bei einem Verfahren der Reckstange (11) in Richtung einer Stangenlängsachse (50) durch den Innenraum (45) hindurch werden jeweils im Innenraum (45) befindliche Wandungsabschnitte der Reckstange (11) sterilisiert.

Als Sterilisiermittel kann beispielsweise Wasserstoffperoxid verwendet werden. Insbesondere ist daran gedacht, ein Gemisch aus Wasserstoffperoxid und Luft zu verwenden.

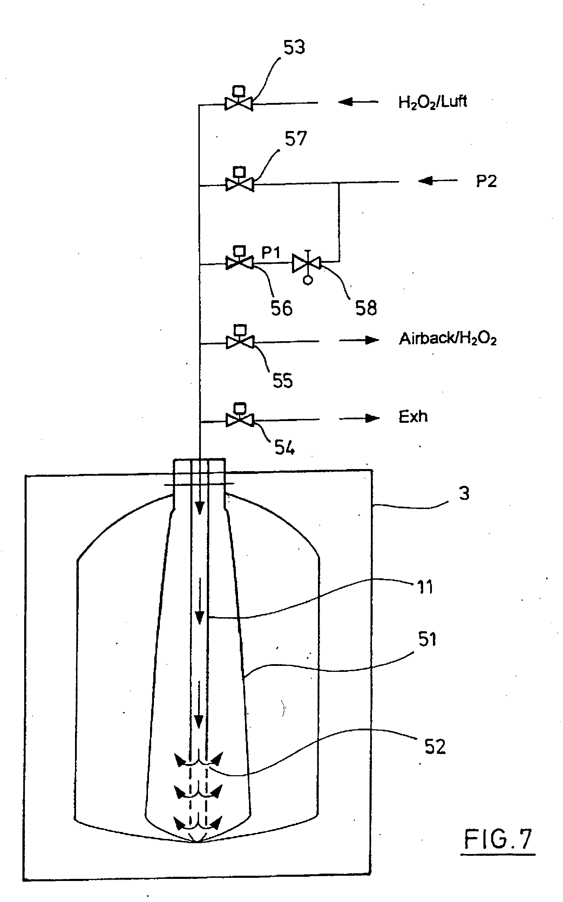

Fig. 7 zeigt eine Ausführungsform, bei der eine Sterilisierung der Reckstange (11) innerhalb der Blasstation (3) erfolgt. Während der Durchführung des Sterilisiervorganges ist die Reckstange in einen Aufnahmebehälter (51) eingefahren. Der Aufnahmebehälter (51) kann ein gereckter und teilexpandierter Vorformling (1) sein, ebenfalls ist es möglich, einen fertig geblasenen Behälter (2) zu verwenden. Insbesondere ist aber auch daran gedacht, für die Durchführung des Sterilisiervorganges einen speziellen Aufnahmebehälter (51) in die Blasstation (3) einzusetzen, der nur für diese spezielle Verwendung vorgesehen ist.

Fig. 7 zeigt eine Ausführungsform, bei der das Sterilisiermittel durch einen Innenraum der Reckstange (1) hindurch zugeführt wird und aus Ausströmöffnungen (52) der Reckstange (11) austritt. Das Sterilisiermittel strömt dann außenseitig an der Reckstange (11) vorbei und führt die vorgesehene Sterilisierung durch.

Fig. 7 zeigt ein Sterilisierventil (53), das die Zufuhr des Sterilisiermittels steuert. Darüber hinaus sind ein Entlüftungsventil (54) und ein Rückführventil (55) dargestellt. Das Rückführventil (55) kann an eine gesonderte Aufnahmeeinrichtung angeschlossen sein, um ein Entweichen des Sterilisiermittels in die Umgebung zu verhindern.

Darüber hinaus sind Blasdruckventile (56, 57) zu erkennen. Ein erster niedrigerer Blasdruck P1 wird unter Verwendung eines Drosselventils (58) aus einem zweiten höheren Blasdruck P2 erzeugt. P1 liegt typischerweise in einem Bereich von 5 bar bis 20 bar, P2 in einem Bereich von 10 bar bis 40 bar.

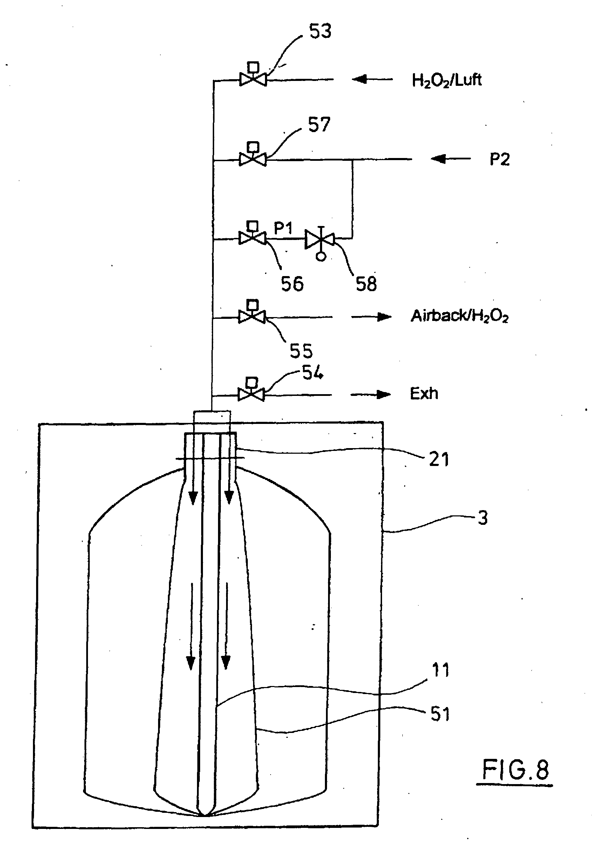

Fig. 8 zeigt eine gegenüber Fig. 7 abgewandelte Ausführungsform. Hier erfolgt die Zuführung des Sterilisiermittels an der Reckstange (11) vorbei in den Aufnahmebehälter (51) hinein. vorzugsweise erfolgt die Zuleitung über einen die Reckstange (11) im Bereich eines Mündungsabschnittes (21) des Aufnahmebehälters (51) umgebenden Ringspalt.

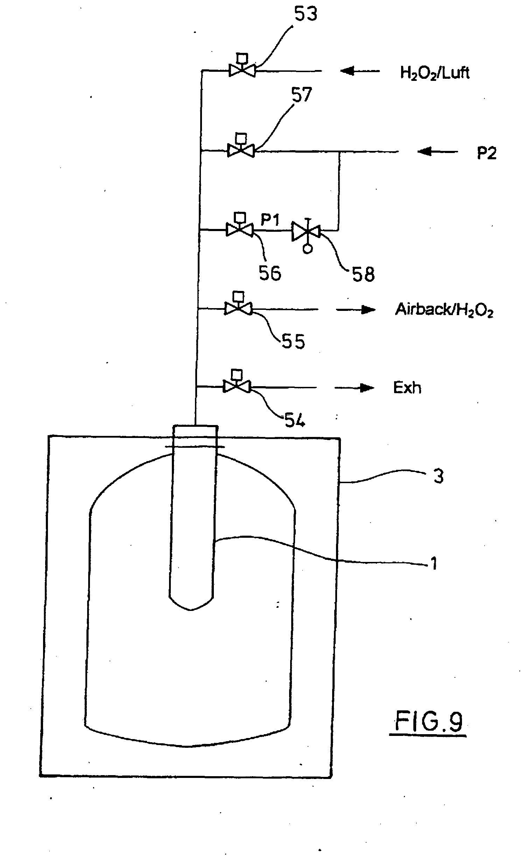

Fig. 9 zeigt eine Anordnung ähnlich zu Fig. 7 und Fig. 8. Hier ist ein Vorformling (1) eingezeichnet. Der Vorformling (1) kann beispielsweise zum Aufnahmebehälter (51) umgeformt werden.

Gemäß einer alternativen Ausführungsform ist auch daran gedacht, die Sterilisierung der Reckstange (11) ohne Verwendung eines separaten Aufnahmebehälters (51) durchzuführen. Bei einer derartigen Ausführungsform begrenzt die Blasform (4) den Sterilisierraum für die Reckstange. Über eine geeignete Abdichtung wird die Zufuhr und Ableitung des Sterilisiermediums gewährleistet.

Die Sterilisierung der Reckstange (11) findet vorzugsweise in einem speziellen Reinigungsmodus der Blasmaschine statt. Dieser Reinigungsmodus kann zyklisch oder bedarfsabhängig aktiviert werden. Bei einer Verwendung von Aufnahmebehältern (51) werden diese nach der Durchführung des Reinigungsvorganges ausgeschleust, um einen Kontakt mit den bei einem üblichen Produktionsablauf geblasenen Behältern (2) zu vermeiden.

Der Aufnahmebehälter (51) weist vorzugsweise bei der Durchführung der Sterilisierung der Reckstange (11) eine Temperatur derart auf, daß eine Kondensation von Sterilisationsmittel auf dem Aufnahmebehälter (51) verhindert ist.

## Patentansprüche

1. Verfahren zur Herstellung von blasgeformten mindestens bereichsweise sterilen Behältern (2), bei dem ein Vorformling (1) aus einem thermoplastischen Material zunächst erwärmt und dann von einer Reckstange (11) gereckt und mit einem unter Druck stehenden Fluid beaufschlagt wird, sowie bei dem ein Sterilisationsmittel in den Bereich des Vorformlings (1) zugeführt wird, **dadurch gekennzeichnet, dass** die Reckstange (11) mindestens bereichsweise und mindestens zeitweise im Bereich einer Blaseinrichtung sterilisiert wird, wobei ein Blasformungsbetrieb der Blaseinrichtung für die Durchführung der Reckstangensterilisierung unterbrochen wird, und wobei für die Durchführung der Sterilisierung der Reckstange (11) ein gesonderter Aufnahmebehälter (51) in eine Blasstation der Blaseinrichtung eingesetzt wird.

2. Verfahren nach Anspruch 1, **dadurch gekennzeichnet, daß** die Reckstange (11) mindestens bereichsweise durch eine Reinigungskammer (43) hindurchgeführt wird.

3. Verfahren nach Anspruch 1, **dadurch gekennzeichnet, daß** ein Vorformling (1) in die Blasstation (3) eingesetzt wird.

4. Verfahren nach Anspruch 3, **dadurch gekennzeichnet, daß** der Vorformling (1) gereckt und teilweise expandiert wird.

5. Verfahren nach einem der Ansprüche 1 bis 4, **dadurch gekennzeichnet, daß** mindestens ein Teil des Sterilisationsmittels durch die Reckstange (11) hindurch zugeführt wird.

6. Verfahren nach einem der Ansprüche 1 bis 4, **dadurch gekennzeichnet, daß** mindestens ein Teil des Sterilisationsmittels an der Reckstange (11) vorbei zugeführt wird.

7. Vorrichtung zur Herstellung von mindestens bereichsweise sterilen blasgeformten Behältern (2), die eine Zuführeinrichtung zur Beaufschlagung mindestens eines Teiles eines Vorformlings (1) mit einem Sterilisationsmittel aufweist, sowie die mit einer Heizstrecke (24) zur Temperierung der Vorformlinge (1) und einer Blaseinrichtung zur Blasverformung der Vorformlinge (1) in die Behälter (2) versehen ist, wobei die Blaseinrichtung eine Reckstange (11) aufweist und wobei die Zuführeinrichtung vor der Blaseinrichtung angeordnet ist, **dadurch gekennzeichnet, daß** im Bereich der Blaseinrichtung eine weitere Zuführeinrichtung für ein Sterilisierungsmittel zur mindestens bereichsweisen und mindestens zeitweisen Sterilisierung der Reckstange (11) angeordnet ist, und wobei in der Blasstation (3) ein Aufnahmebehälter (51) angeordnet ist, wobei die Vorrichtung ausgebildet und eingerichtet ist, einen Blasformungsbetrieb der Blaseinrichtung, in dem ein üblicher Produktionsablauf erfolgt, zur Durchführung eines Verfahrens nach einem der Ansprüche 1 bis 6 zu unterbrechen.

## Claims

1. Method for the production of blow-moulded containers (2) at least regions of which are sterile, in which a preform (1) made from a thermoplastic material is first heated and then stretched by a stretching bar (11) and then a fluid that is under pressure is applied to it, and in which a sterilisation agent is introduced into the area of the preform (1), **characterised in that** the stretching rod (11), at least regions thereof and at least temporarily, is being sterilised in the area of a blowing facility, whereby a blow-moulding operation of the blowing facility is being interrupted for carrying out the stretching rod sterilisation, and whereby a separate receiving container (51) is being inserted into a blowing station of the blowing facility for carrying out the sterilisation of the stretching rod (11).

2. Method according to claim 1, **characterised in that** at least regions of the stretching rod (11) are guided through a cleaning chamber (43).

3. Method according to claim 1, **characterised in that** a preform (1) is being inserted into the blowing station (3).

4. Method according to claim 3, **characterised in that** the preform (1) is being stretched and partially expanded.

5. Method according to any one of the claims 1 to 4, **characterised in that** at least a part of the sterilisation agent is introduced while passing through the stretching rod (11).

6. Method according to any one of the claims 1 to 4, **characterised in that** at least a part of the sterilisation agent is introduced while by-passing the stretching rod (11).

7. Device for the production of blow-moulded containers (2) at least regions of which are sterile, that comprise a feed facility for application of a sterilisation agent to at least a part of a preform (1), and which is provided with a heating section (24) for temperature-controlling the preforms (1) and a blowing facility for blow moulding the preforms (1) to form the containers (2), whereby the blowing facility comprises a stretching rod (11) and whereby the feed facility is arranged upstream of the blowing facility, **characterised in that** a further feed facility for a sterilisation agent for sterilisation of the stretching rod (11), at least of regions thereof or at least temporarily, is arranged in the area of the blowing facility, and whereby a receiving container (51) is arranged in the blowing station (3), whereby the device is appropriately designed and operable to interrupt a blow-moulding operation of the blowing facility, in which a common production process takes place, for carrying out a method according to any one of the claims 1 to 6.

## Revendications

1. Procédé de fabrication de récipients (2) au moins partiellement stériles moulés par soufflage dans le cadre duquel une préforme (1) en un matériau thermoplastique est d'abord chauffée puis étiré par une barre d'étirage (11) et soumise à l'action d'un fluide sous pression, et dans le cadre duquel un agent de stérilisation est amené dans la zone de la préforme (1), **caractérisé en ce que** la barre d'étirage (11) est, au moins en partie et au moins temporairement, stérilisé dans la zone d'un dispositif de soufflage, le fonctionnement du dispositif de soufflage en mode de moulage par soufflage étant interrompu pour procéder à la stérilisation de la barre d'étirage (11), et un récipient séparé (51) étant mis en place dans une station de soufflage du dispositif de soufflage pour procéder à la stérilisation de la barre d'étirage (11).

2. Procédé selon la revendication 1, **caractérisé en ce que** la barre d'étirage (11) est en partie au moins conduite à travers une chambre de nettoyage (43).

3. Procédé selon la revendication 1, **caractérisé en ce que** une préforme (1) est introduite dans la station de soufflage (3).

4. Procédé selon la revendication 3, **caractérisé en ce que** la préforme (1) est étirée et partiellement expansée.

5. Procédé selon l'une des revendications 1 à 4, **caractérisé en ce que** l'introduction d'une partie au moins de l'agent de stérilisation se fait à travers la barre d'étirage (11).

6. Procédé selon l'une des revendications 1 à 4, **caractérisé en ce que** une partie au moins de l'agent de stérilisation passe à côté de la barre d'étirage (11).

7. Dispositif de fabrication de récipients (2) au moins partiellement stériles moulés par soufflage, présentant un dispositif d'adduction d'un agent de stérilisation agissant sur une partie au moins d'une préforme (1), et muni d'une section de chauffage (24) pour tempérer les préformes (1) et d'un dispositif de soufflage pour la transformation par soufflage des préformes (1) en récipients (2), le dispositif de soufflage étant muni d'une barre d'étirage (11) et le dispositif d'adduction étant placé avant le dispositif de soufflage, **caractérisé en ce que,** dans la zone du dispositif de soufflage, est agencé un second dispositif d'adduction d'un agent de stérilisation pour stériliser au moins en partie et au moins temporairement la barre d'étirage (11), un récipient (51) étant agencé dans la station de soufflage (3) et le dispositif étant conçu et aménagé pour interrompre un fonctionnement du dispositif de soufflage en mode de moulage par soufflage de la production courante pour mettre en oeuvre un procédé selon l'une des revendications 1 à 6.
